(19) Europäisches Patentamt

European Patent Office

Office européen des brevets

(11) Veröffentlichungsnummer: **0 059 767**
**B1**

(12) # EUROPÄISCHE PATENTSCHRIFT

(45) Veröffentlichungstag der Patentschrift:
**31.10.84**

(51) Int. Cl.³: **G 03 B 15/06**

(21) Anmeldenummer: **81101611.2**

(22) Anmeldetag: **06.03.81**

(54) **Reflektoreinrichtung für lichttechnische und fotographische Zwecke.**

(43) Veröffentlichungstag der Anmeldung:
**15.09.82 Patentblatt 82/37**

(45) Bekanntmachung des Hinweises auf die Patenterteilung:
**31.10.84 Patentblatt 84/44**

(84) Benannte Vertragsstaaten:
**AT BE CH DE FR GB IT LI LU NL SE**

(56) Entgegenhaltungen:
**DE - B - 1 018 366**
**DE - C - 949 461**
**DE - C - 1 072 572**
**DE - U - 1 769 412**
**DE - U - 1 834 515**
**US - A - 2 513 961**

(73) Patentinhaber: **LUNOS Lüftung GmbH & Co Ventilatoren KG, Wilhelmstrasse 31-34, D-1000 Berlin 20 (DE)**

(72) Erfinder: **Tinz, Bernhard H., Brunnenwiesen 43D, D-7000 Stuttgart 75 (DE)**

(74) Vertreter: **Selting, Günther, Dipl.-Ing. et al, Deichmannhaus am Hauptbahnhof, D-5000 Köln 1 (DE)**

**Beschreibung**

Die Erfindung betrifft eine Reflektoreinrichtung für lichttechnische und fotographische Zwecke, mit einem Reflektorschirm und einer den Reflektorschirm tragenden Halterung.

Für die Ausleuchtung von Filmszenen, für Standfotographien und ähnliche lichttechnische oder fotographische Zwecke bzw. zum Aufhellen, werden Reflektoreinrichtungen benutzt, die entweder aus reflektierenden Metallblechen oder aus parabolischen oder anderen reflektierenden Schirmen bestehen. Bekannt sind Reflektorschirme, die nach Art eines Regenschirmes aufgespannt werden können und deren Bespannung mit einer reflektierenden Beschichtung versehen ist. Diese Reflektoreinrichtungen haben den Vorteil, daß sie im zusammengelegten Zustand wenig Platz erfordern und somit leicht mitgeführt werden können. Nachteilig ist jedoch, daß die Reflektorfläche biegsam bzw. faltbar sein muß. Wenn die Reflektorfläche aus einer Metallbeschichtung besteht, können infolge des Schirmgestells und beim Falten während des Zusammenlegens leicht Knickstellen oder Faltenbildungen auftreten, wodurch die Beschichtung beschädigt wird. Großformatige Metallspiegel, wie sie zum Aufhellen benutzt werden, sind dagegen unhandlich und schwergewichtig.

Bekannt sind ferner Reflektoren, die zahlreiche nach Art eines Fächers auseinanderfaltbare Lamellen aufweisen, die um eine gemeinsame Achse herum schwenkbar sind und sich zu einer kreisförmigen Scheibe ergänzen (US-A-2 513 961, DE-U-1 769 412). Da die Lamellen im Bereich der Achse sämtlich übereinanderliegen, hat der Reflektor eine erhebliche Stärke (Dicke). Während des Auffaltens und des Zusammenfaltens des Reflektors reiben die einzelnen Lamellen gegeneinander.

Der Erfindung liegt die Aufgabe zugrunde, eine Reflektoreinrichtung der eingangs genannten Art zu schaffen, die, ohne daß Beschädigungen der Reflektorfläche zu befürchten sind, zusammengelegt und entsprechend den jeweiligen Anforderungen des Einzelfalls mit unterschiedlich großer Reflektorfläche benutzt werden kann.

Zur Lösung dieser Aufgabe ist erfindungsgemäß vorgesehen, daß die Halterung eine reflektierende Vordere Platte aufweist, die in Verbindung mit einer hinter ihr angeordneten Stützvorrichtung den Reflektorschirm festhält, und daß der Reflektorschirm aus mehreren plattenförmigen Teilen besteht, die mit jeweils einer Ecke zwischen der vorderen Platte und der Stützvorrichtung festklemmbar sind.

Hierbei bildet die vordere Platte einen Teil der Halterung für den Reflektorschirm, den sie teilweise überdeckt, und ersetzt infolge ihrer reflektierenden Vorderfläche gleichzeitig den überdeckten Teil des Reflektorschirmes. Die reflektierende vordere Platte der Halterung hat also eine lichttechnische (reflektierende) und eine mechanische (Halte-)Funktion. Durch die Halterung wird also die reflektierende Gesamtfläche nicht verkleinert. Die Halterung mit der vorderen Platte bildet dabei nur das Mittelteil bzw. den Kern der gesamten reflektierenden Fläche, während die Teile des Reflektorschirmes nach allen Seiten hin weit über die vordere Platte der Halterung hinausragen.

Eine derartige Reflektoreinrichtung kann in vielfältiger Weise genutzt werden, und zwar in Verbindung mit einer Lichtquelle oder auch zum Reflektieren des Lichtes von Fremdlichtquellen oder des Tageslichts. Die aus verschiedenen Komponenten bestehende Reflektoreinrichtung kann auch so genutzt werden, daß ihre Komponenten einzeln in Verbindung mit verschiedenen Lichtquellen bzw. als Aufheller eingesetzt werden.

Ein besonderer Vorteil besteht darin, daß an der Halterung Reflektorschirme unterschiedlicher Größen und Formen bzw. ein einziger Reflektorschirm, der aus mehreren Teilen besteht, befestigt werden können. Der Reflektorschirm selbst bzw. die Teile aus denen er zusammengesetzt ist, ist vorzugsweise starr, so daß der Reflektorschirm in der Halterung selbsttragend ist und im demontierten Zustand eine (ebene oder gekrümmte) Platte bildet.

Die Halterung mit der reflektierenden Platte kann in dem Fall, daß nur eine relativ geringfügige Ausleuchtung erforderlich ist, auch ohne den zusätzlichen Reflektorschirm benutzt werden, wobei nur das von der vorderen Platte reflektierte Licht zur Ausleuchtung zur Verfügung steht. Bei größerem Lichtbedarf kann hinter der Platte ein starrer Reflektorschirm festgeklemmt werden, der die vordere Platte der Halterung teilweise überragt.

In vorteilhafter Ausgestaltung der Erfindung ist die vordere Platte mit dem einen Arm eines Klemmscharniers verbunden, dessen anderer Arm als Halteschiene ausgebildet ist. An der Halteschiene kann eine Lampe befestigt werden und die Halteschiene kann ihrerseits an einem Stativ montiert werden.

Dadurch entsteht eine feste (aber einstellbare) Zuordnung zwischen der Halterung bzw. deren reflektierender vorderer Platte und der Lampe. Vorzugsweise ist das Klemmscharnier in der Nähe eines Randes der vorderen Platte angeordnet, so daß die Reflektionsfläche der vorderen Platte voll von einer Lampe bestrahlt werden kann, die auf der Halteschiene befestigt ist.

In vorteilhafter Ausgestaltung der Erfindung ist die Stützvorrichtung auf einem von der Rückseite der vorderen Platte mittig abstehenden Zapfen gleitend angeordnet und sie wird durch eine Klemmvorrichtung am Zurückweichen gehindert. Die Stützvorrichtung kann als eine zweite Platte ausgebildet sein, die in Form und Größe annähernd der vorderen Platte entspricht. Während die vordere Platte eine im wesentlichen ebene reflektierende Vorderseite und eine ebenfalls ebene Rückseite haben sollte, braucht die zweite Platte nur eine ebene Vorderseite zu haben, mit der sie an dem zwischen die Platten einschiebbaren Reflektorschirm angreift, während die Rückseite der zweiten Platte mit Verstärkungsrippen versehen oder auf beliebige andere Weise profiliert sein kann.

Mit einer relativ kleinformatigen Halterung kann ein Reflektorschirm mit sehr großer Reflektionsfläche gehalten werden. Wenn dieser große Reflektorschirm einstückig ausgebildet ist, muß er allerdings eine Durchtrittsöffnung für den die beiden Platten der Halterung verbindenden Zapfen aufweisen. Besteht der Reflektorschirm dagegen aus mehreren Teilen, die mit ihren Ecken im Bereich der Halterung gegeneinanderstoßen, sind keine besonderen Durchbrüche erforderlich. Diese Variante hat außerdem den Vorteil, daß die einzelnen Teile des Reflektorschirmes klein und handlich sind. Wenn diese Teile im wesentlichen kongruent sind, können sie aufeinandergestapelt und kleinformatig zusammengepackt werden. Vorzugsweise sind die Teile des Reflektorschirmes zu einer geschlossenen Fläche mit ihren Rändern gegeneinandersetzbar und die Ränder zweier gegeneinanderstoßender Teile weisen ineinandergreifende Haltemittel auf. Diese Haltemittel können beispielsweise als Nut und Feder, als Teile einer Schwalbenschwanzverbindung oder als Teile eines Wechselrezeß ausgebildet sein. Wichtig ist, daß die Kanten der zu dem Reflektorschirm zusammengesetzten Teile formschlüssig ineinandergreifen, so daß an der Reflektionsfläche keine Kantenverschiebungen zwischen den Teilen erfolgen. Außerdem sollten die einzelnen Teile radial zu dem Zapfen der Halterung gegeneinander verriegelt sein, so daß sie erst nach dem Lösen der rückwärtigen Stützvorrichtung voneinander getrennt werden können.

Zur Erzielung einer milden, möglichst schattenfreien Ausleuchtung ist in vorteilhafter Weiterbildung der Erfindung vorgesehen, daß mindestens die Oberfläche des Reflektorschirmes aus einem körnigen oder geschäumten Kunststoff besteht. Aus Gründen der Gewichtsersparnis ist es darüber hinaus zweckmäßig den Reflektorschirm bzw. dessen Teile insgesamt aus einem körnigen oder geschäumten Kunststoff, herzustellen. Hierzu eignet sich insbesondere Polystyrol-Kunststoff, mit einem Raumgewicht von ca. 30 bis 50 g/l. Ein derartiger Kunststoff hat zwar einerseits ein geringes Gewicht, andererseits aber auch die erforderliche Festigkeit.

Die Vorderfläche des Reflektorschirmes kann auch mit einer Metallbeschichtung versehen sein. Diese Metallbeschichtung kann aus einer Folie oder einer aufgedampften Metallschicht bestehen. Es ist auch möglich, den Körper des Reflektorschirmes aus körnigem oder geschäumten Kunststoff herzustellen und auf diesem die Metallbeschichtung anzubringen.

Im folgenden wird ein Ausführungsbeispiel der Erfindung unter Bezugnahme auf die Zeichnungen näher erläutert. Es zeigt

Fig. 1 die Reflektoreinrichtung mit großem Reflektorschirm,

Fig. 2 die Reflektoreinrichtung mit kleinem Reflektorschirm,

Fig. 3 die Reflektoreinrichtung nach Fig. 2, montiert auf einem Stativ mit Lampe,

Fig. 4 die Reflektoreinrichtung ohne zusätzlichen Reflektorschirm, wobei nur die reflektierende vordere Platte der Halterung wirksam ist,

Fig. 5 die Komponenten der Reflektoreinrichtung in zusammengelegtem Zustand,

Fig. 6 einen Schnitt durch die Halterung einschließlich der Halterschiene,

Fig. 7 eine Ansicht von Fig. 6 aus Richtung des Pfeiles VII,

Fig 8 eine Teilansicht der Reflektoreinrichtung nach Fig. 1 von hinten und

Fig. 9 einen Schnitt entlang der Linie IX-IX der Fig. 8.

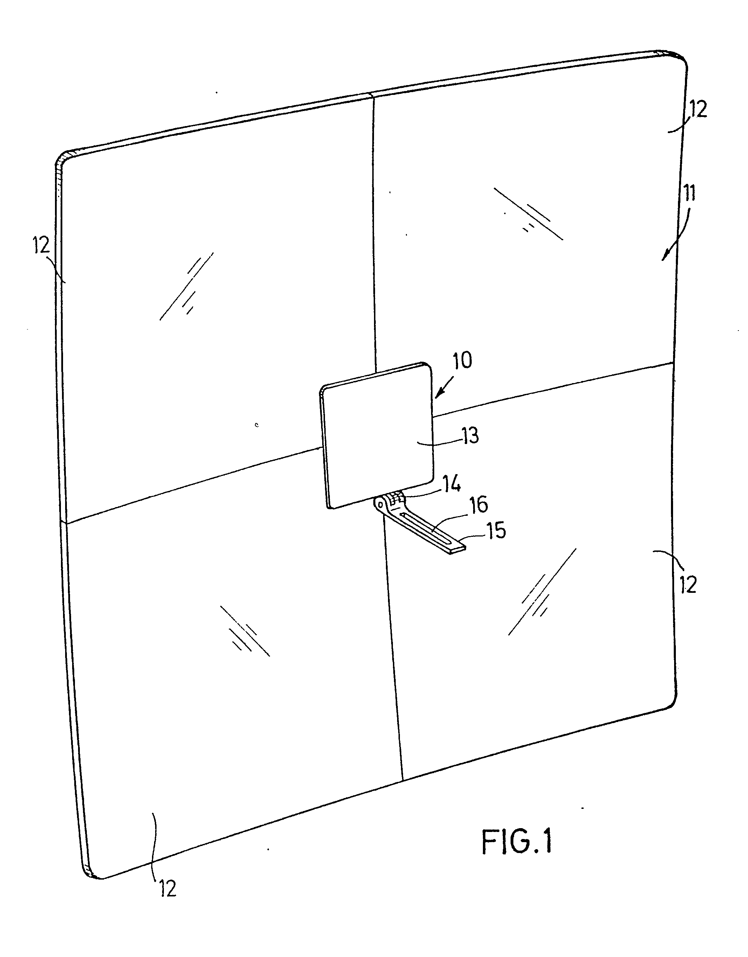

Die in Fig. 1 mit voller Reflektorfläche aufgebaute Reflektoreinrichtung besteht aus der Halterung 10 und dem aus vier untereinander gleichen Teilen 12 zusammengesetzten Reflektorschirm 11. Die plattenförmigen Teile 12 sind jeweils quadratisch und sie bilden einen quadratischen Reflektorschirm 11, in dessen Mitte sich die Halterung 10 befindet. Die Vorderseiten der plattenförmigen Teile 12 bilden zusammen mit der reflektierenden Fläche der vorderen Platte 13 der Halterung 10 die Reflektionsfläche.

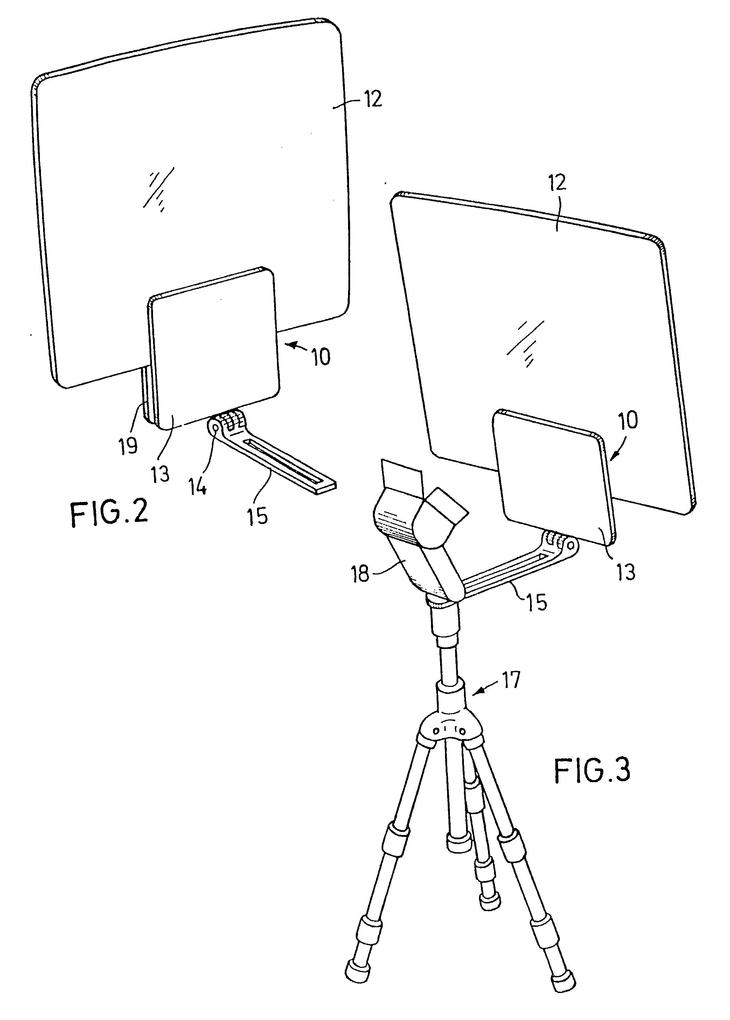

Die vordere Platte 13 der Halterung 10 bildet den einen Arm eines Klemmscharniers 14, dessen metallischer zweiter Arm 15 verschwenkt werden kann. Das Klemmscharnier 14 ist entlang der Unterkante der vorderen Platte 13 angeordnet. Die metallische Halteschiene 15 weist einen Längsschlitz 16 zum Hindurchstecken des Klemmzapfens eines Stativs 17 (Fig. 3) auf. Auf diese Weise kann die Halteschiene 15 in horizontaler Ausrichtung auf einem Stativ 17 befestigt werden, wobei zusätzlich an der Halteschiene 15 eine Lampe 18 im Abstand vor der reflektierenden Fläche montiert werden kann.

Bei der in den Fig. 2 und 3 dargestellten Variante ist zwischen der vorderen Platte und der rückwärtigen zweiten Platte 19 der Halterung 10 nur eines der plattenförmigen Teile 11 eingeklemmt, und zwar so, daß die Unterkante des Teiles 11 etwa entlang der horizontalen Mittellinie der Platten 13 und 19 verläuft, während die Platte 11 im übrigen nach oben und nach den beiden Seiten weit über die Platten 10 und 19 hinaus übersteht. Zwar wird die Vorderfläche des Teiles 11 teilweise von der vorderen Platte 13 überdeckt, jedoch ist die wirksame reflektierende Fläche insgesamt größer als die Vorderfläche des Teiles 11, weil ja auch die Vorderfläche der Platte 13 reflektierend ist.

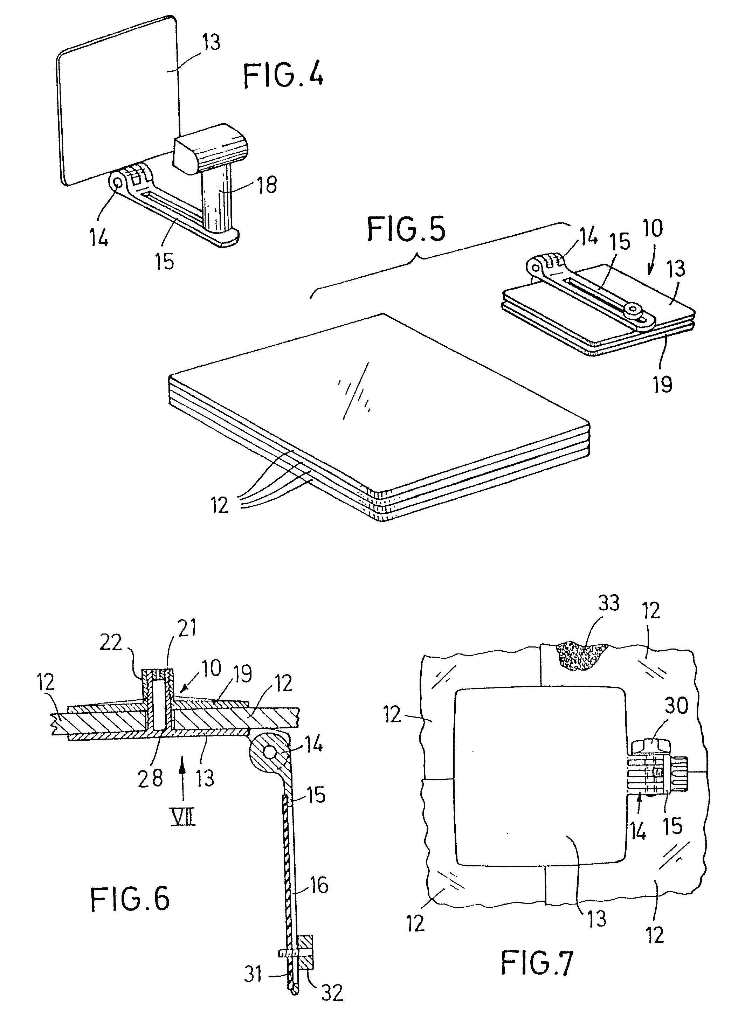

Von der Rückseite der vorderen Platte 13 der Halterung 10 steht ein hohl ausgebildeter zylindrischer Zapfen 21 rechtwinklig nach hinten ab. Der Zapfen 21 ist genau in der Mitte der Platte 13 angesetzt. Die rückwärtige Platte 19 ist mit einer Mittelöffnung auf den Zapfen 21 aufgeschoben. Das über die Platte 19 hinausragende rückwärtige Ende des Zapfens 21 ist mit einem Gewinde versehen, auf das eine Gewindebuchse 22, die außen Greifrillen aufweist, aufgeschraubt ist. Wie Fig. 6 zeigt, sind die plattenförmigen Teile 12 des Reflektorschirmes zwischen den Platten 13 und 19 eingeklemmt, wobei die Klemmkraft durch Festziehen der Gewindebuchse 22 bestimmt werden kann.

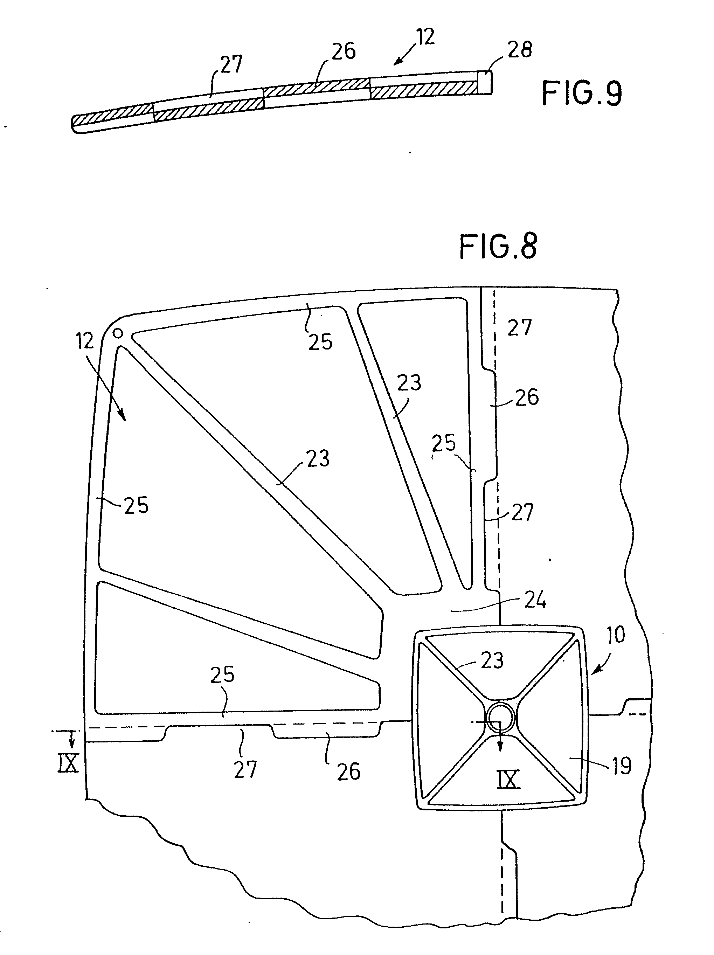

Fig. 8 zeigt die Ansicht der plattenförmigen Teile 12 und der Halterung 10 von hinten. Die plattenförmigen Teile 12 sind in demjenigen Bereich, in dem sie zwischen den Platten 13 und 19 eingeklemmt werden, also im Bereich 24 einer Ecke, verdickt ausgebildet, ebenso wie die Ränder 25 verdickt ausgebildet sind. Von dem Eckbereich 24 führen ebenfalls verdickt ausgebildete Streben 23 strahlenförmig zu den Rändern 25, während die zwischen den Rippen 23, 24, 25 liegenden Felder relativ dünnwandig ausgebildet sind.

Die Formgebung der Ränder der plattenförmigen Teile 12 ist aus den Fig. 8 und 9 zu ersehen. Während die beiden Ränder, die die Begrenzung des vollständig montierten Reflektorschirmes 11 bilden, glatt ausgebildet sind, sind die Ränder, an denen das Teil 12 jeweils gegen den Rand eines benachbarten Teiles 12 stößt, mit abwechselnden Zungen 26 und Aussparungen 27 versehen, die bei zwei gegeneinanderstoßenden Rändern komplementär zueinander ausgebildet sind, so daß die gegeneinandergesetzten Teile 12 sich mit ihren Rändern ineinander verhaken. Die Zungen 26 und Ausnehmungen 27 bilden einen Wechselrezeß, der verhindert, daß die Teile 12 sich unbeabsichtigt gegeneinander verschieben können.

Jede der Platten 24 hat im Bereich der gegen den Zapfen 21 stoßenden Ecke eine Viertelkreisaussparung 28 (Fig. 9), damit die Teile 12 fugenlos in einer Ebene gegeneinander stoßen können.

Fig. 7 zeigt die Ausbildung des Klemmgelenks 14, das eine Klemmschraube 30 aufweist, mit der die zahnartig ineinandergreifenden Scheiben der Platte 13 und der Halteschiene 15 gegeneinander gedrückt werden können. Die Halteschiene 15 ist mit einer Gummiauflage und mit einer durch den Längsschlitz 16 hindurchragenden Befestigungsschraube 32 versehen.

Das Material der plattenförmigen Teile 12 ist ein Polystyrol-Kunststoff (Styropor), mit einem Raumgewicht von etwa 30 bis 50 g/l. Dieses Material hat eine ausreichend große Festigkeit und ein geringes Gewicht. Die körnige Struktur der Oberfläche der plattenförmigen Teile 12 ist in Fig. 7 bei 33 angedeutet. Diese körnige Struktur bewirkt eine streuende Lichtreflektion, wodurch eine weiche und schattenfreie Beleuchtung erfolgt. Die vordere Platte 13 der Halterung 10 besteht ebenfalls aus Polystyrol, jedoch nicht aus einem körnigen oder geschäumten Material, sondern aus vollem bzw. festem Polystyrol. Aus dem gleichen Material kann auch die rückwärtige Platte 19 bestehen.

Im zusammengelegten Zustand (Fig. 5) besteht die Reflektoreinrichtung aus den übereinandergestapelten plattenförmigen Teilen 12 und der Halterung 10, wobei die Platten 13 und 19 gegeneinandergelegt sind und die Halteschiene 15 gegen die Vorderseite der Platte 13 geklappt ist.

## Patentansprüche

1. Reflektoreinrichtung für lichttechnische und fotographische Zwecke, mit einem Reflektorschirm und einer den Reflektorschirm tragenden Halterung, dadurch gekennzeichnet, daß die Halterung (10) eine reflektierende vordere Platte (13) aufweist, die in Verbindung mit einer hinter ihr angeordneten Stützvorrichtung (Platte 19) den Reflektorschirm (11; 12) festhält, und daß der Reflektorschirm (11) aus mehreren plattenförmigen Teilen (12) besteht, die mit jeweils einer Ecke zwischen der vorderen Platte (13) und der Stützvorrichtung (Platte 19) festklemmbar sind.

2. Reflektoreinrichtung nach Anspruch 1, dadurch gekennzeichnet, daß die vordere Platte (13) den einen Arm eines Klemmscharniers (14) bildet, dessen anderer Arm als Halteschiene (15) ausgebildet ist.

3. Reflektoreinrichtung nach Anspruch 2, dadurch gekennzeichnet, daß das Klemmscharnier (14) in der Nähe eines Randes der vorderen Platte (13) angeordnet ist.

4. Reflektoreinrichtung nach einem der Ansprüche 1 bis 3, dadurch gekennzeichnet, daß die Stützvorrichtung (Platte 19) auf einem von der Rückseite der vorderen Platte (13) mittig abstehenden Zapfen (21) gleitend angeordnet ist, und durch eine Klemmvorrichtung (22) am Zurückweichen gehindert wird.

5. Reflektoreinrichtung nach einem der Ansprüche 1 bis 4, dadurch gekennzeichnet, daß die Stützvorrichtung eine zweite Platte (19) ist, die in Form und Größe annähernd der vorderen Platte (13) entspricht.

6. Reflektoreinrichtung nach einem der Ansprüche 1 bis 5, dadurch gekennzeichnet, daß die Teile (12) des Reflektorschirmes (11) zu einer geschlossenen Fläche mit ihren Rändern gegeneinander setzbar sind, und daß die Ränder zweier gegeneinanderstoßender Teile (12) ineinandergreifende Haltemittel (26, 27) aufweisen.

7. Reflektoreinrichtung nach einem der Ansprüche 1 bis 6, dadurch gekennzeichnet, daß mindestens die Vorderfläche des Reflektorschirmes (11; 12) aus einem körnigen oder geschäumten Kunststoff besteht.

8. Reflektoreinrichtung nach Anspruch 7, dadurch gekennzeichnet, daß der Reflektorschirm (11) bzw. dessen Teile (12) insgesamt aus einem körnigen oder geschäumten Kunststoff bestehen.

9. Reflektoreinrichtung nach einem der vorhergehenden Ansprüche, dadurch gekennzeichnet, daß die Vorderfläche des Reflektorschirmes (11; 12) mit einer Metallbeschichtung versehen ist.

10. Reflektoreinrichtung nach einem der vorhergehenden Ansprüche, dadurch gekennzeichnet, daß die vordere Platte (13) der Halterung (10) aus demselben Grundmaterial besteht wie der Reflektorschirm (11; 12).

## Claims

1. Reflector for purposes of illumination engineering and photography, with a reflector screen and a mount for the reflector screen, the characteristic feature of which is that the mount (10) has a reflecting front plate (13) which, in conjunction with a supporting device behind the plate, holds the reflector screen (11; 12), and that the reflector screen (11) consists of several plate-shaped sections (12), each of which has one corner which can be clamped between the front plate (13) and the supporting device (plate 19).

2. A reflecting device as detailed in claim 1, the characteristic feature of which is that the front plate (13) forms one arm of the clamping hinge (14), the other arm of which is designed as a retaining bar (15).

3. Reflector device as detailed in claim 2, the characteristic feature of which is that the clamping hinge (14) is arrayed near one of the edges of the front plate (13).

4. A reflector device as detailed in one of the claims 1—3, the characteristic feature of which is that the supporting device (plate 19) is slidable and fitted onto a journal (21) attached in the centre of the rear wall of the front plate (13); a clamping device (22) prevents the supporting device (plate 19) from moving back.

5. A reflector device as detailed in one of the claims 1—4, the characteristic feature of which is that the supporting device is a second plate (19), the form and size of which approximately correspond to those of the front plate (13).

6. A reflector device as detailed in one of the claims 1—5, the characteristic feature of which is that the edges of the sections (12) of the reflector screen (11) can be placed against each other to form a closed surface, and that the edges of two abutting sections (12) have interlocking reatining devices (26, 27).

7. A reflector device as detailed in one of the claims 1—6, the characteristic feature of which is that at least the front face of the reflector screen (11; 12) is made from a granular or foamed plastic material.

8. A reflector device as detailed in claim 7, the characteristic feature of which is that the reflector screen (11) or the sections thereof (12) are made from a granular or foamed plastic material.

9. A reflector device as detailed in one of the above claims the characteristic feature of which is that the front face of the reflector screen (11; 12) has a metal coating.

10. A reflector device as detailed in one of the above claims, the characteristic feature of which is that the front plate (13) of the mount (10) are made from the same material as the reflector screen (11; 12).

## Revendications

1. Dispositif réflecteur pour application dans la technique d'éclairage et de photographie avec un écran réflecteur et une fixation portant l'écran réflecteur, caractérisé en ce que la fixation (10) présente une plaque avant réfléchissante (13) qui maintient l'écran réflecteur (11, 12) en liaison avec un dispositif d'appui (plaque 19) placé derrière elle, et en ce que l'écran réflecteur (11) se compose de plusieurs parties (12) en forme de plaques qui peuvent être bloquées au moyen d'un coin entre la plaque avant (13) et le dispositif d'appui (plaque 19).

2. Dispositif réflecteur selon la revendication 1, caractérisé en ce que la plaque avant (13) forme un bras d'une charnière de blocage (14) dont l'autre bras a la configuration d'un rail de soutien (15).

3. Dispositif réflecteur selon la revendication 2, caractérisé en ce que la charnière de blocage (14) est disposée à proximité d'un bord de la plaque avant (13).

4. Dispositif réflecteur selon l'une quelconque des revendications 1 à 3, caractérisé en ce que le dispositif d'appui (plaque 19) est disposé coulissant sur un tenon (21) dépassant au milieu du dos de la plaque avant (13), et est empêché de reculer par un dispositif de blocage (22).

5. Dispositif réflecteur selon l'une quelconque des revendications 1 à 4, caractérisé en ce que le dispositif d'appui est une seconde plaque (19) qui correspond presque à la plaque avant (13) par sa forme et sa dimension.

6. Dispositif réflecteur selon l'une quelconque des revendications 1 à 5, caractérisé en ce que les parties (12) de l'écran réflecteur (11) peuvent être disposées en une surface fermée avec leurs bords les uns contre les autres, et en ce que les bords de deux parties (12) en aboutement présentent des moyens de retenue agissant les uns avec les autres (26, 27).

7. Dispositif réflecteur selon l'une quelconque des revendications 1 à 6, caractérisé en ce qu'au moins la surface avant de l'écran réflecteur (11, 12) se compose d'une matière grenue ou en mousse.

8. Dispositif réflecteur selon la revendication 7, caractérisé en ce que l'écran réflecteur (11) ou respectivement ses parties (12) se composent, dans l'ensemble, d'une matière synthétique grenue ou en mousse.

9. Dispositif réflecteur selon l'une quelconque des revendications précédentes, caractérisé en ce que la surface avant de l'écran réflecteur (11, 12) est pourvu d'une couche de métal.

10. Dispositif réflecteur selon l'une quelconque des revendications précédentes, caractérisé en ce que la plaque avant (13) de la fixation (10) se compose du même matériau de base que l'écran réflecteur (11, 12).

FIG.1

FIG.2

FIG.3

FIG.4

FIG.5

FIG.6

FIG.7

0 059 767

FIG.9

FIG.8

13